# EUROPEAN PATENT SPECIFICATION

(11) **EP 3 083 000 B1**
(45) Date of publication and mention of the grant of the patent: **27.12.2017**
(21) Application number: 14828507.5
(22) Date of filing: 12.12.2014
(51) Int. Cl.: B01D 35/147

(54) **A FILTER GROUP**
FILTERGRUPPE
GROUPE FILTRANT

(30) Priority: 17.12.2013 IT RE20130094
(43) Date of publication of application: 26.10.2016
(73) Proprietor: Ufi Filters s.p.a., 46047 Porto Mantovano (Mantova) (IT)
(72) Inventor: GIRONDI, Giorgio, I-46100 Mantova (IT)
(74) Representative: Corradini, Corrado
(86) International application number: PCT/IB2014/002799
(87) International publication number: WO 2015/092523

(56) References cited:
- WO-A1-2012/143793

## Description

### TECHNICAL FIELD

The present invention relates to a filter group and a support body destined to support a filter cartridge internally of a filter group.

The invention mainly relates to a filter group for fuel, oil or comburent air in the motoring field, for example in the field of automobiles or heavy duty vehicles or the like.

### PRIOR ART

As is known, the filtration of diesel in the motoring sector is generally obtained with a group that comprises an external casing provided with an inlet for the fluid to be filtered and an outlet of the filtered fluid, and a filter cartridge able to define a communicating chamber with the inlet of the fluid to be filtered.

In this way, the fluid flowing from the inlet towards the outlet of the filter group is forced to cross through the filter wall that retains the impurities possibly present in it.

A typical filter cartridge comprises a filter wall having a tubular shape and two support plates, upper and lower, which are fixed to opposite ends of the filter wall.

At least one of these support plates is commonly provided with a central opening, through which the internal volume of the filter wall is set in communication with the inlet of the fluid to be filtered, in a case where the filter wall is configured to be crossed from inside towards outside, or with the outlet of the fluid to be filtered, in a case where the filter wall is configured to be crossed from outside towards inside.

The casing, in these types of filters, usually comprises or is associated to a support body able to support the filter cartridge.

In some applications, the installation and replacement of the filter cartridge can represent a problem, linked to the steps of movement and manoeuvring thereof.

To attempt to alleviate the task of the personnel installing the filter cartridge, the prior art provides various solutions for removably hooking the filter cartridge to the casing (for example a lid of a beaker body or a support body). A first type of these solutions includes the use of a bayonet engagement: these types of hook-up comprise at least two profiled protrusions defined in the filter cartridge, each of which can be inserted in a special groove realized in the support flange, so that the hook-up is carried out by a modest axial translation of the filter cartridge towards the support flange and by a consequent modest rotation with respect to the axis of the filter cartridge.

These bayonet engagements, however, exhibit some drawbacks due mainly to the necessary complexity of the hook-up.

It is in fact generally necessary to include means blocking the reciprocal rotation between the filter cartridge and the support flange (or casing), which are for example flexible-type devices, grooves with labyrinthine profiles or threaded organs.

These blocking systems are on the one hand not very reliable and not resistant over time, especially after repeated replacements of the filter cartridge, while on the other hand they lead to an increase in production costs of the filter cartridge and the casing (support flange), as well as the costs due to the increase in times required, during maintenance operations, for replacing the filter cartridge.

A second known type, alternative to the above-described bayonet engagements, includes the use of axial-fit hooks, which, however, in types of applications where the filter cartridge exhibits a weight and a size often make the exact positioning of the engaging means awkward.

Further, the need to ensure the engaging of a filter cartridge of this type, rather heavy, would necessarily lead to the realizing of an axial snap-fit that is difficult to remove.

A third type of hook-up is shown in International Patent Application WO 2012/143793 in the name of the present Applicant.

In these engagements, the teeth which snap-fit into hooking seatings located on a support body, exhibit a ramp on a lateral flank which, together with a corresponding ramp which extends over the whole lateral flank of the hooking seating, facilitates the unhooking of the filter cartridge from the support body, operating a reciprocal rotation thereof with respect to the axis of the filter cartridge.

The ramp realised in the lateral flank of the engaging seating, however, rather complicates the blocking steps of the filter cartridge internally of the casing.

It has been found that in some circumstances, while the cover of the casing is locked, for example by means of appropriate threads realised on the casing and on the cover, the thrust exerted on the support body by the screwing-up rotation leads to the detaching of the filter cartridge from the support body, with a consequent positioning error of the filter cartridge internally of the casing, a fact which makes it impossible to safely use the engaging systems in those applications of filter groups provided with a closed casing.

An aim of the present invention is to obviate the above-mentioned drawbacks in the prior art with a solution that is simple, rational and relatively inexpensive.

In practice, an aim of the present invention is to realise an engagement, between the filter cartridge and the body supporting it, which is at the same time easily resolvable and safe to use, including in applications that are destined to be contained internally of the closed casings.

These aims are attained by the characteristics of the invention reported in the independent claim. The dependent claims delineate preferred and/or particularly advantageous aspects of the invention.

### DESCRIPTION OF THE INVENTION

In particular the invention relates to a filter group comprising:
- a support body provided with at least an engaging seating and
- a filter cartridge provided with a substantially toroidal filter wall and a support plate provided with at least an engaging tooth able to snap-engage to the engaging seating,
where the engaging seating is provided with a rest surface lying on a substantially perpendicular plane to the axis of the filter wall and two opposite flanks that rise from opposite sides of the rest surface.

In the invention, at least a flank of the flanks comprises a first portion substantially squared with respect to the rest surface and a second portion axially prolonging the first portion and defining a disengaging ramp that is inclined with respect to the lie plane of the first portion.

With this solution, the engaging seating, and in particular the lateral flank thereof, exhibits a profile configured so as to offer a resistance to differentiated rotation according to the axial position assumed by the engaging tooth in the engaging seating.

In this way it is possible to define a portion (second portion) of the flank which enables an easy engagement of the filter cartridge and a portion of the flank (first portion) which, on the contrary, prevents or limits the possibility of disengagement.

The second portion is advantageously configured so as to flex the engaging tooth in a radial direction, distancingly from the engaging seating, following a reciprocal rotation between the filter cartridge and the support body with respect to the axis of the filter wall.

In practice, the second portion defines a rising ramp or a cam profile that brings, during the reciprocal rotation of the filter cartridge with respect to the support body, the point of the engaging tooth to follow the ramp, flexing backwards and thus freeing the engaging seating gradually and with less effort by the personnel.

In a further advantageous aspect of the invention, the second portion is substantially rounded.

Alternatively, the second portion can be substantially flat.

In any case, the first portion and the second portion are for example inclined to one another by an angle comprised between 30° and 60°, preferably though not limitedly 45°.

In a further aspect of the invention, the second portion is most proximal to the rest surface and the first portion is most distal from the rest surface.

In this way, the disengaging of the engaging tooth is facilitated only when it is in the position in which it is resting on the rest surface of the engaging seating and the filter cartridge is activated in rotation so as to near the tooth to the second portion, while the disengagement is prevented or hampered in the other positions that the tooth can assume internally of the engaging seating.

Alternatively the second portion can be more distant from the rest surface and the first portion is instead the closer to the rest surface.

In this way, the unhooking of the engaging tooth is facilitated only when it is in the position in which it is detached from the rest surface of the engaging seating and the filter cartridge is activated in translation and rotation so as to near the tooth to the second portion, while the disengaging is prevented or not facilitated when the tooth is resting on the rest surface of the engaging seating.

For the same aims, in a further aspect of the invention the other flank, rising from the rest surface of the engaging seating, is substantially planar and substantially squared with the rest surface.

In a further aspect of the invention, the engaging tooth is elastically yielding and is able to give rise to a shape constraint with the rest surface of the engaging seating by snap-coupling following a reciprocal translation along the axis of the filter wall, so as to removably reciprocally constrain the support body to the filter cartridge.

With the aim of further improving the facility of disengagement of the filter cartridge from the support body in those applications where it is necessary, it is advantageously possible for the engaging tooth to comprise an inclined flank with respect to a radial plane, the inclined flank being facing towards the flank comprising the first portion and the second portion.

Also, the inclined flank of the engaging tooth and the second portion are such as to go into dragging contact following an axial rotation of the filter cartridge with respect to the support body, for the unhooking of the engaging tooth from the rest surface.

In a further aspect of the invention, the support body comprises a flange, able to be sealedly engaged to the filter cartridge, and a shank branching from the flange towards the filter cartridge, the engaging seating being realized at the shank.

At least a seal ring is preferably comprised, interposed between the filter cartridge (for example fixed thereto so as to be replaced together there-with) and the support body and destined to be compressed between them following the snap-coupling between the engaging tooth and the engaging seating.

Thrust means, for example elastic, are advantageously interposed between the support body and the filter cartridge, able to reciprocally push the filter cartridge in an axial direction with respect to the support body.

With this solution the axial thrust of the engaging tooth can be facilitated such that it can go in proximity (to the level) of the first or second portion of the flank in the engaging seating when the engaging tooth is inserted in the engaging seating.

In a further aspect of the invention, a support body is provided for filter cartridges internally of a casing which comprises at least an engaging seating able to removably support a filter cartridge, where the engaging seating is provided with a substantially planar rest surface and two rising opposite flanks located on opposite sides of the rest surface.

With the invention, at least a flank of the flanks comprises a first portion substantially squared with the rest surface and a second portion axially prolonging the first portion defining a disengaging ramp that is inclined with respect to a lie plane of the first portion.

### BRIEF DESCRIPTION OF THE DRAWINGS

Further characteristics and advantages of the invention will emerge from a reading of the description that follows, provided by way of non-limiting example, with the aid of the figures of the accompanying tables.

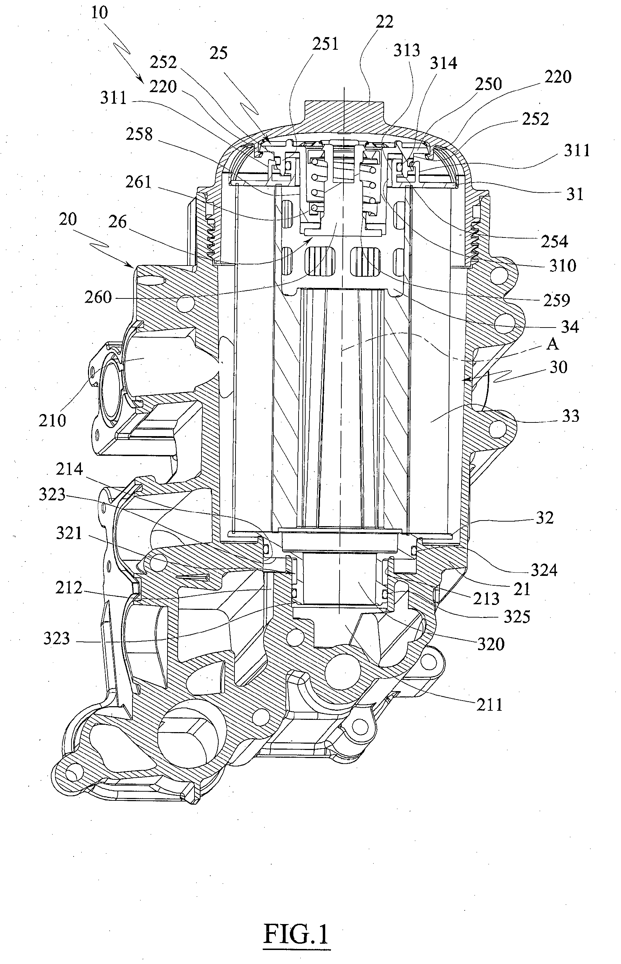

Figure 1 is a longitudinal sectional view of a filter group according to a first embodiment of the invention.

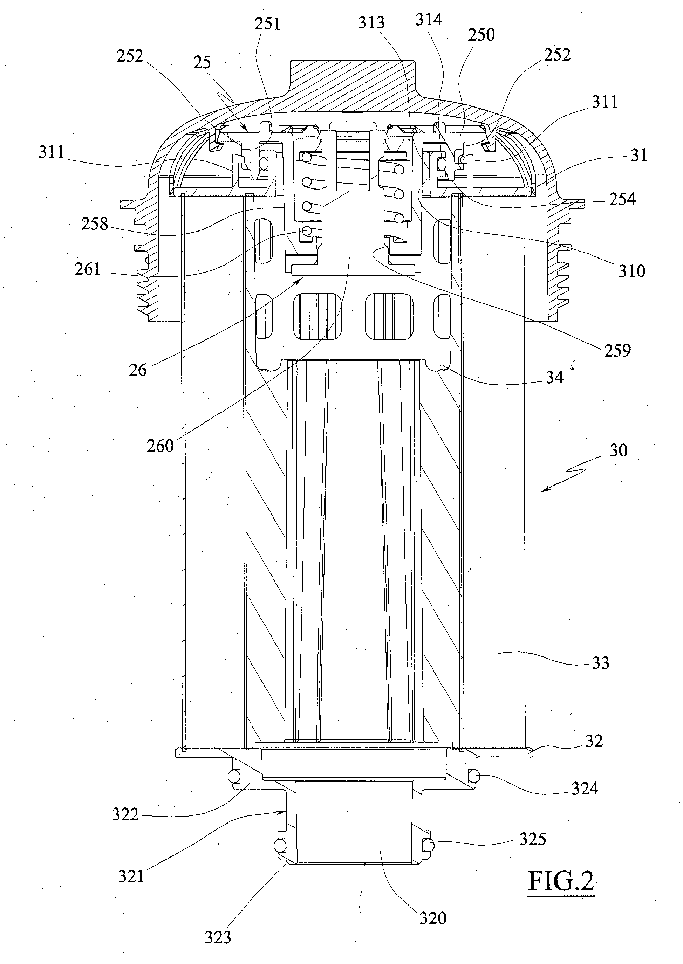

Figure 2 is a view of a detail of figure 1.

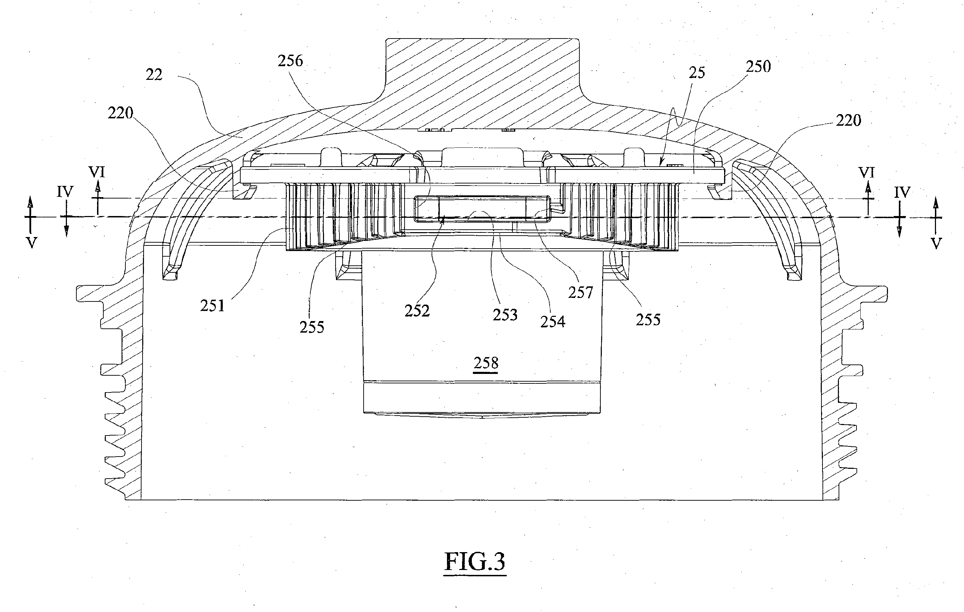

Figure 3 is a view in partial section of a support body of a filter cartridge of the filter group according to the first embodiment of the invention.

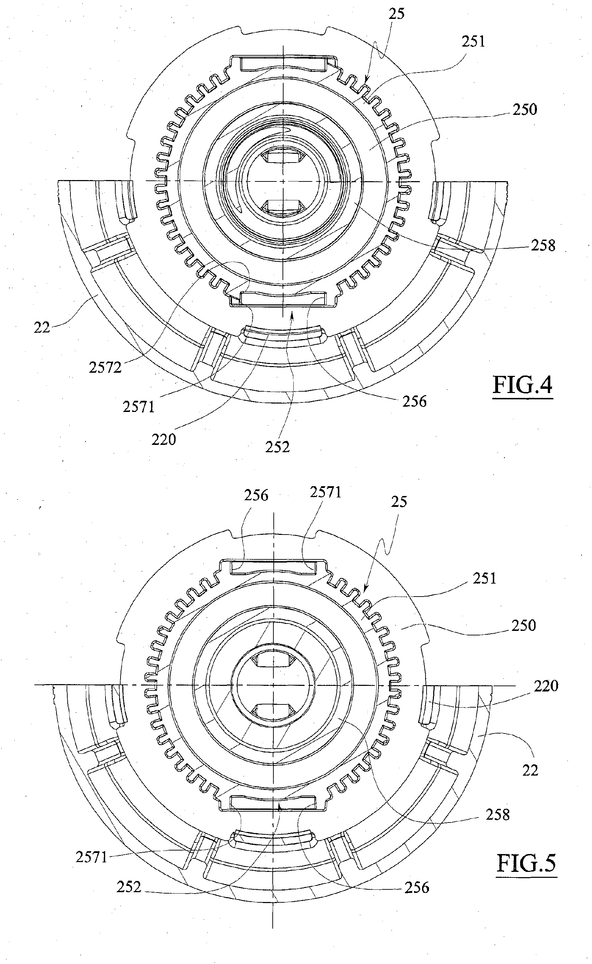

Figure 4 is the view along section line IV-IV of figure 3.
Figure 5 is the view along section line V-V of figure 3.

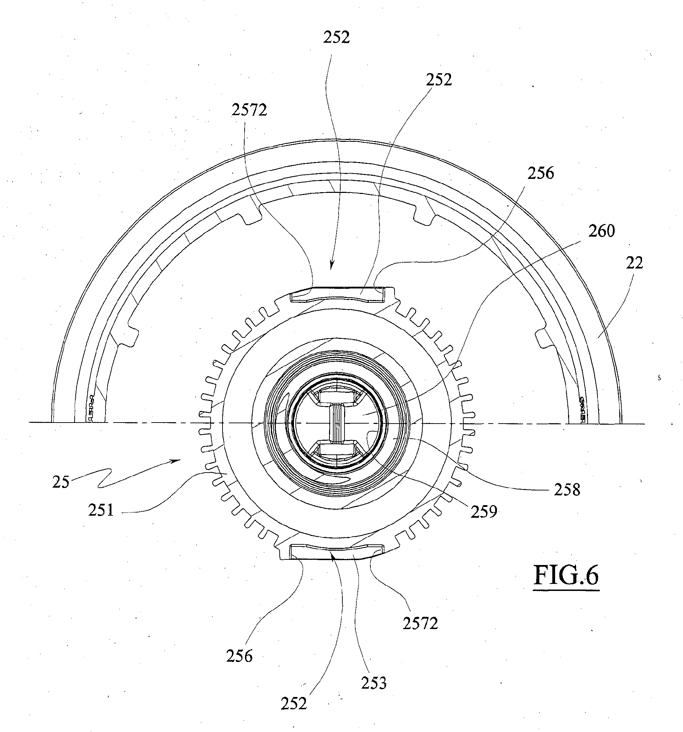

Figure 6 is the view along section line VI-VI of figure 3.
Figure 7 is a lateral side view of an assembled support body and filter cartridge, according to the first embodiment.
Figure 8 is the view along section line VIII-\/III of figure 7.
Figure 9 is a second lateral view of an assembled support body and filter cartridge, according to the first embodiment.
Figure 10 is the view along section line X-X of figure 9.
Figure 11 is a third lateral view of an assembled support body and filter cartridge, according to the first embodiment.
Figure 12 is a view along section line XII-XII of figure 11.
Figure 13 is a schematic axonometric view of the engaging seating of the support body according to the first embodiment of the invention.
Figure 14 is a schematic axonometric view of the engaging seating with the engaging tooth in an operative position attached thereto, according to the first embodiment.
Figure 15 is a schematic axonometric view of the engaging seating with the engaging tooth in a further operating position hooked thereto, according to the first embodiment.
Figure 16 is a longitudinal view of a filter group according to a second embodiment of the invention.
Figures 17 is an axonometric view of the filter cartridge of the filter group according to the second embodiment.
Figure 18 is a larger-scale exploded detail of the connection between the support body according to the filter cartridge of figures 16-17.
Figure 19, is a schematic axonometric view of the engaging seating of the support body according to a first variant of the second embodiment of the invention.
Figure 20 is a schematic axonometric view of the engaging seating of figure 19 with the engaging tooth engaged thereto in an operative position.
Figure 21 is a schematic axonometric view of the engaging seating of figure 19 with the engaging tooth engaged thereto in a further operating position.
Figure 22 is a schematic axonometric view of the engaging seating of the support body according to a second variant of the second embodiment of the invention.
Figure 23 is a schematic axonometric view of the engaging seating of figure 22 with the engaging tooth engaged thereto in an operating position.
Figure 24 is a schematic axonometric view of the engaging seating of figure 22 with the engaging tooth engaged thereto in an operating position.

### BEST WAY OF CARRYING OUT THE INVENTION

With particular reference to the figures, reference numeral 10 denotes in its entirety a filter group, for example for fuel (e.g. Diesel oil), oil, air or another fluid in the motoring field.

With particular reference to the first embodiment shown in figures from 1 to 16, the filter group 10 comprises an external casing, denoted in its entirety by 20, which in turn comprises a beaker-shaped body 21, and a cover 22 suitable for closing the beaker-shaped body 21.

The cover 22 (upper in the first embodiment shown in figures from 1 to 15) is conformed, in the example, substantially as a lid and exhibits a thread (external) screwable into a corresponding thread (internal) defined on the open edge of the beaker-shaped body 21 (which is located inferiorly of the cover 22 in the first embodiment shown in figures from 1 to 15).

The following are defined in the beaker-shaped body: at least an inlet conduit 210 of the fluid to be filtered, in the example being afforded in a lateral wall of the beaker-shaped body 21, and an outlet conduit 211 of the filtered fluid, in the example afforded at the bottom of the beaker-shaped body 21 and preferably in a central position.

The beaker-shaped body 21 can also optionally comprise an outlet conduit 212, for example also provided at the bottom of the beaker-shaped body 21, preferably in an off-centre position.

the outlet conduit 211 is located coaxially of the beaker-shaped body 21 and extends at least partially internally thereof through a first cylindrical seating 213; the outlet conduit 212 is located in an off-centre position and, for example, extends at least partially internally of the beaker-shaped body 21 through a second cylindrical seating 214 coaxial with the first cylindrical seating 213 and having a larger diameter with respect thereto and being located at a higher level thereof.

Flexible hooks 220 can be realised, for example, internally of the cover 22, the free end of which projects internally of the internal volume 20 of the casing 20.

The filter group 10 comprises a support body 25 able to support a filter cartridge, denoted in its entirety by reference numeral 30, accommodated in the housing 20 and which will be described in detail in the following.

The support body 25 comprises an annular flange 250 whose perimeter edge (or other suitable part) is able to engage (for example by means of appropriate radial grooves which prevent rotation of the support body with respect to the cover 22 when engaged) to substantially flexible snap hooks 220 so as to be retained internally of the housing 20.

The support body 25 further comprises a hollow shank 251 projecting below the annular flange 250 (i.e. from the opposite side with respect to the face of the annular flange facing towards the cover 22).

A plurality of engaging seatings 252, for example lateral slots (for example of substantially rectangular shape) are formed at the shank 251.

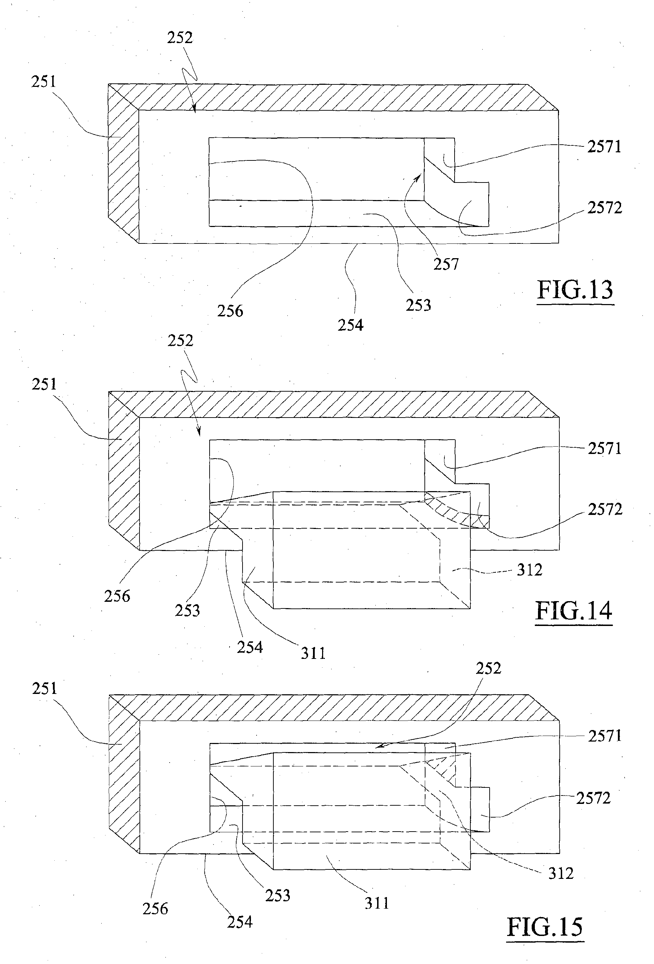

Each engaging seating 252 (shown in detail in the schematic illustration of figure 13) is inferiorly delimited by a substantially planar support surface 253 that is parallel to the annular flange 250.

In practice, each rest surface 253 is defined by the lower edge of the slot made in the shank 251.

At each engaging seating 252, the shank 251, and in particular the free lower edge 254 thereof, exhibits two guide surfaces 255, which are arranged on opposite sides with respect to the respective engaging seating 252 and are inclined so as to converge towards the engaging seating (each pair of guide surfaces is then associated with the respective engaging seating, being realised on the same shank 251).

In practice, each guide surface 255 constitutes a plane that is inclined with respect to the plane defined by the rest surface 253 so as to provide an entry zone to the respective engaging seating 252.

In other words the lower edge 254 of the shank 251 has a substantially undulating conformation, defined by the guide surfaces 255, which are each inclined by an acute angle with respect to the parallel direction to the annular flange 250, the inclinations of each pair of guide surfaces 255 being in opposite directions two by two, so as to be converging towards the centre thereof.

Between the two guide surfaces 255, the lower edge 254 has a substantially planar profile that is parallel to the rest surface 253; in substance a bearing flap of the shank 251 distances the flat profile of the bottom edge 254 from the rest surface 253.

Each engaging seating 252 comprises two lateral walls 256 and 257, opposite one another and rising from the rest surface 253 on opposite sides thereof.

At least one of the lateral walls 256, 257 of the engaging seating 252, in the present example the right lateral wall 257, comprises a first section 2571 that is substantially planar and squared to the rest surface 253.

In particular, in this context the term "squared" is intended to meant perpendicular or which in any case has a flat profile lying in a radial plane (or substantially radial), while the rest surface 253 has a circumferential development.

Further, the at least one of the lateral walls 256, 257 of the engaging seating 252 that comprises the first section 2571, in the present example the right lateral wall 257, comprises a second portion 2572 contiguous to the first portion 2571 and defining a disengaging ramp inclined with respect to the plane of the first portion 2571.

In practice the disengaging ramp is defined by a portion of reduced radial thickness of the shank 251, stretching along a limited axial portion of the lateral wall 257 of the engaging seating 252.

The portion having reduced radial thickness in practice exhibits a radial end substantially flush with a wall (in the example the internal wall) of the shank 251 and the other radial end positioned substantially at the centre-line of the radial thickness of the shank.

The disengaging ramp could advantageously be achieved by an inclined connection surface (with respect to the radial direction) between the external face and the internal face of the shank 251, which defines a profile having variable thickness along the circumferential direction with a relatively low gradient between the external face and the internal face of the shank.

The disengaging ramp, i.e. the second portion 2572, could also be parallel to, though slimmer than, the lateral wall 256 opposite the engaging seating 252. At the second portion 2572, the plan profile of the shank 251 has a gradually-increasing thickness (in the radial direction) continuously and starting from the tapered end positioned at the internal wall of the shank 251 up to the broadened end, where it joins with the external wall of the shank.

The second portion 2572 is advantageously substantially rounded. Alternatively, the second section 2572 could be substantially planar.

The first portion 2571 and the second portion 2572 are mutually inclined at an angle of between 30° and 60°, for example substantially 45°.

The second portion 2572 substantially branches from the rest surface itself; in practice, the second portion 2752 is proximal to the rest surace, while the first portion 2571 extends the second portion 2572 axially and is, therefore, distal from the rest surface 253.

The other lateral flank 256 of the engaging seating 252, opposite the first portion 2571 and the second portion 2572, is substantially planar and substantially squared with respect to the rest surface, or is flat and lies on a radial plane of the annular flange 250.

The lateral flank 256 might be made at a radially-broadened portion of the shank 251.

In the example shown in the figures the shank 251 has two retaining seatings 252 equidistant from one another (opposite) and aligned in plan view on an imaginary circumference coaxial to the annular flange 250.

The filter group 10 also comprises a bypass valve 26, for example associated to the support body 25.

In practice, the bypass valve 26 is associated, for example, so as to be removable with respect to the cover 22 and with respect to the filter cartridge 30, through the support body 25.

Alternatively, the bypass valve can be unremovably fixed to the support body 25, i.e. the engaging/fixing means that reciprocally fix the bypass valve 26 to the support body 25 can be dimensioned so that the bypass valve 26, once engaged/fixed to the support body 25, is not removed from it and therefore from the cover 22.

The support body 25 comprises a cylindrical seating 258, for example coaxial to the shank 251 and defined internally thereof.

The cylindrical seating 258 is defined for example in a single body with the annular flange 250.

The cylindrical seating 258 includes a central through-hole 259 and defines the valve seating of the bypass valve 26.

The bypass valve 26 comprises an obturator 260 associated movably, for example slidably, internally of the cylindrical seating 258, between a closing position, in which it occludes the central through-hole 259, and an open position, in which it frees the central hole 259.

In the present example the obturator 260 is substantially mushroom-shaped with the stem inserted in the central through-hole 259 and the head projecting downwards, i.e. towards the inside of the casing 20.

In particular, the obturator 260 is movable from the closed position to the open position in contrast with elastic means, for example, in opposition to a spring 261 for example a helical compression spring, interposed between the bottom of the cylindrical seating 258 (where the central through-hole 259 is located) and a broadened enlarged end 260 opposite the head of the obturator.

The filter cartridge 30 comprises a first support plate 31 (for example upper in the first embodiment shown in figures from 1 to 15) and a second support plate 32 (for example lower in the first embodiment shown in figures from 1 to 15), which are fixed to opposite ends of a filter wall 33 of tubular shape, in the illustrated example a pleated membrane, which defines and delimits a substantially cylindrical internal volume.

The filter cartridge 30 can also comprise one or more support cores 34 inserted internally of the filter wall and affording through-openings for the passage of fluid under filtration.

The second support plate 32 exhibits a central hole 320 centred on the longitudinal axis A of the filter wall 33.

In particular, the second support plate 32 has a substantially cylindrical central shank 321, for example having a variable section according to the height.

The central shank 321 comprises a first broadened portion 322 branching directly from the second support plate and a second tapered portion 323, exhibiting a smaller diameter than the first portion 322.

The first portion 322 and the second portion 323 are suitable for supporting a respective first annular seal 324 and a second annular seal 325.

In use, the second portion 323 with the respective second annular seal 325 can be inserted substantially snugly internally of the first cylindrical cavity 213 of the casing 20, while the first portion 322 and the respective first annular seal 324 can be inserted substantially snugly in the second cylindrical seating 214.

When the filter cartridge 30 is in position in the casing 20, the outlet conduit 212 is occluded by the first portion 322 and the respective first annular seal 324, while the outlet conduit 211 is in communication with the internal volume of the filter cartridge 30 (i.e. the filter wall 33) through the central hole 320 and the central shank 321 of the second support plate 32.

The axial depth of the first cylindrical seating 213 (and the second portion 323) is greater than the axial depth of the second cylindrical seating 214 (and the first portion 322).

Because of this, during the axial extraction of the filter cartridge 30 from the casing 20, the discharge conduit 212, following a modest axial translation of the filter cartridge, is released before the outlet conduit 211 is released (and vice versa when the filter cartridge 30 is inserted in the casing 20).

The first support plate 31 has a central hole 310 centred on the longitudinal axis A of the filter wall 33, which is for example in communication, via the bypass valve 26, with the inlet conduit 210 of the fluid to be filtered. With the above-described configuration, the filter cartridge 30 defines internally of the casing 20 an external chamber communicating with the inlet conduit 210 and an internal chamber, coinciding with the internal volume of the filter wall 33, which communicates with the outlet conduit 211 of the fluid filtered through the central hole 320 and the central shank 321 of the second support plate 32.

A plurality of engaging teeth 311 is fashioned at the surface of the first support plate 31 opposite the filter wall 33, which plurality of engaging teeth rises from the first support plate and defines an engaging surface facing towards the first support plate 31.

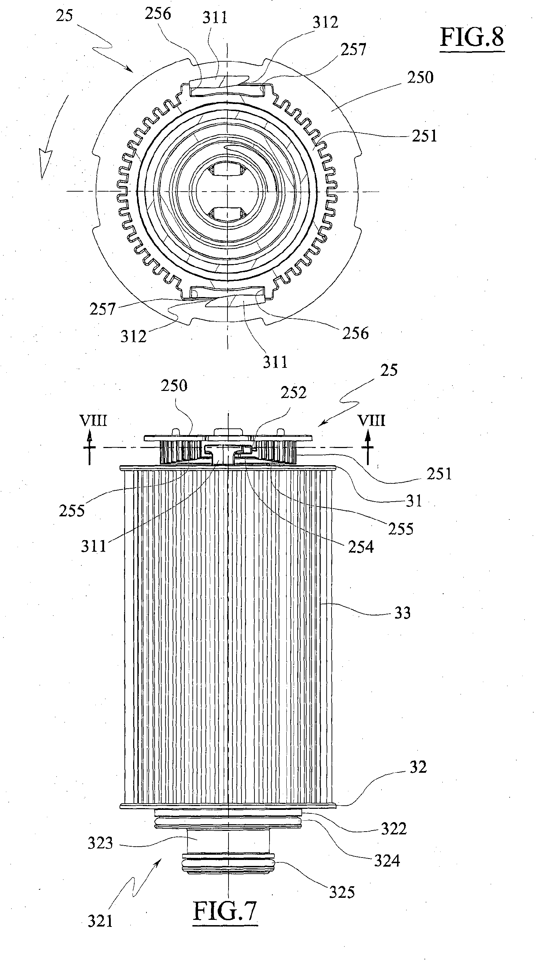

The engaging surface is substantially planar and lies on a substantially perpendicular plane to the longitudinal axis A of the filter wall 33 and is destined to be supported on the rest surface 253 of an engaging seating 252. Each engaging tooth 311 also comprises an inclined flank 312, as can be observed in figures 8, 10 and 12, (i.e. exhibiting at least a portion that is inclined with respect to the radial direction) that is lateral and exhibits substantially a complementary shape to the second portion 2572 realised in the lateral wall 257 of the shank 251.

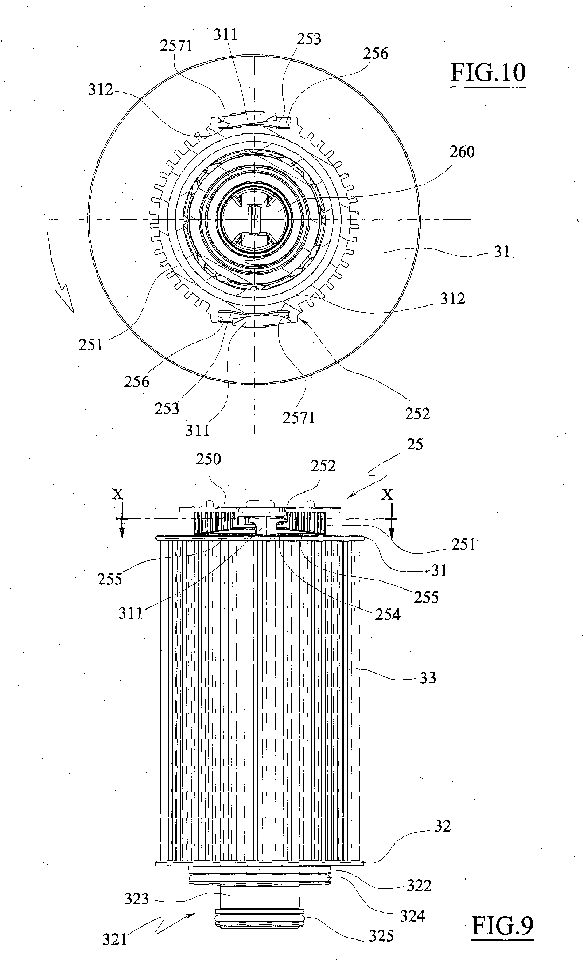

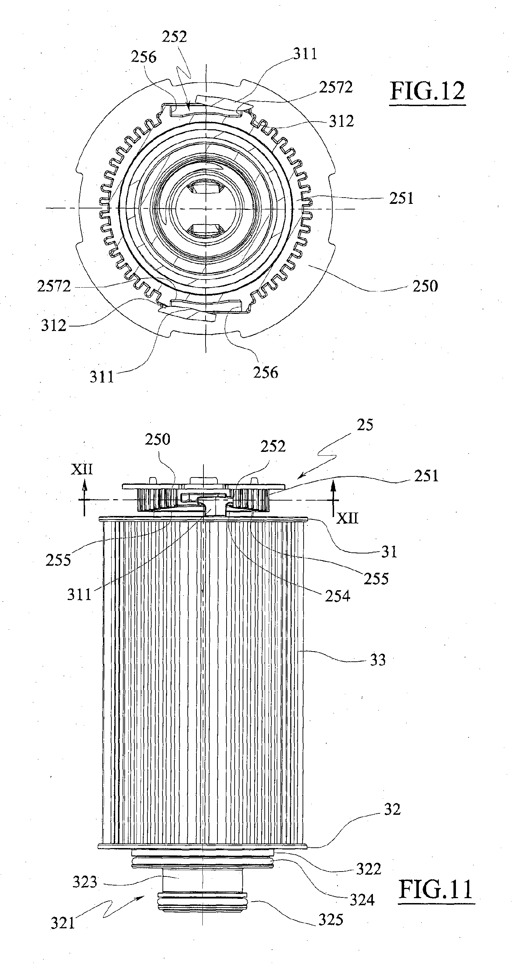

In practice, the inclined portion of the inclined flank 312 defines a bevelling on a lateral side of the engaging tooth 311, which facilitates the sliding of the engaging tooth on the second portion 2572 of the shank 251, as a result of a limited rotation (in a disengaging direction and indicated by the arrows in figure 10 and figure 12), with respect to the longitudinal axis A of the filter cartridge 30 with respect to the support body 25.

In practice, the engaging tooth 311 exhibits the inclined flank 312 to the right.

The flank opposite the inclined flank 312 of the engaging tooth 311 is substantially straight (meaning by this that it exhibits a profile lying in a radial plane) and the engaging seating 252 also exhibits a straight left lateral flank 256 so as to stably halt the reciprocal rotation between the filter cartridge 30 and the support body 25, with respect to the longitudinal axis A in the opposite direction to the disengaging direction denoted by the arrow in figure 8.

In particular, in the example shown in the figures, two engagement teeth 311 are present, aligned in plan view with respect to an imaginary circle which is concentric (for example to the central hole 310) with respect to the hole defined in the first support plate 31 and equally spaced from one another (on opposite sides).

An annular projection 313 is provided in an internal zone of the engaging teeth 311, which annular projection 313 is formed in the first plate support 31 and rises therefrom. The annular projection 313 in use (externally) supports a sealing ring 314 which in use will be compressed between the annular projection 313 and the annular flange 250, in particular the internal surface of the shank 251 in an axial portion thereof located below the engaging seatings 252.

The engaging tooth 311 is also free to move axially in the engaging seating 252 with a limited axial displacement between two end positions, of which a first lowered position, in which the engaging tooth 311 is resting by the engaging surface thereof on the rest surface 253 of the engaging seating 252, and a second raised position, in which the top of the engaging tooth 311 is in contact with the wall of the engaging seating 252 opposite the rest surface 253 (or in any case in which the engaging surface of the engaging tooth is detached from the rest surface 253).

With the tooth in the first position, the flank of the engaging tooth 311 (for example, the inclined flank 312 if present) is flanked to the second portion 2572 (aligned along a circumferential direction passing through the side of the engaging tooth).

When the filter cartridge 33 is rotated with respect to the support body 25 into the disengaging direction, with the engaging tooth 311 in the first position, the contact area between the engaging tooth and the lateral wall 257 of the engaging seating 252 is located at the second portion 2572 (see the broken line in figure 14).

Following this disengaging rotation the engaging tooth 311 is flexed backwards and gradually exits from the support on the rest surface 253, enabling the filter cartridge 30 to be removed from the engagement with the support body 25 by means of an axial extraction thereof with respect to the support body 25.

With the tooth in the second position the flank of the engaging tooth 311 (for example, the inclined side 312 if present) is flanked to the first portion 2571 (aligned along a circumferential direction and passing through the side of the engaging tooth).

When the filter cartridge 30 is set in rotation with respect to the support body 25 in the disengaging direction with the engaging tooth 311 in the second position, the contact area between the engaging tooth and the lateral wall 257 of the engaging seating 252 is located at the first portion 2571 (see the broken line in figure 15).

Following this rotation, the ability to flex backwards of the engaging tooth 311 is substantially prevented or in any case limited and it remains stably resting on the rest surface 253 of the engaging seating 252 of the support body 25. In fact, the force required to flex the engaging tooth 311 depends on the rigidity thereof, on the dimensioning of the inclined flank 312 of the engaging tooth 311, and the dimensioning of the first section 2571; in a case of a particularly rigid engaging tooth 311, the first portion 2571 might go to rest on an intermediate zone of the inclined flank 312 of the engaging tooth and the rigidity of the engaging tooth 311 would prevent the disengaging of the two components during screwing-in of the cover 22.

Regardless of whether the engaging tooth 311 is in the first or in the second position, when the filter cartridge 30 is set in rotation with respect to the support body 25 in the opposite direction to the disengaging direction, the contact area between the flank of the engaging tooth 311 (opposite the inclined side 312) and the engaging seating 252 is located at the lateral wall 256.

This contact between substantially planar and parallel profiles prevents or in any case limits the ability of the engaging tooth 311 to flex backwards and it remains stably supported on the rest surface 253 of the engaging seating 252 of the support body 25.

The disengaging direction is preferably the same as the screwing-in direction of the cover 22 on the beaker-shaped body 21, the opposite direction to the disengaging direction being the same as the unscrewing direction of the cover on the beaker-shaped body.

Alternatively, in certain applications the disengaging direction might be opposite to the screwing-in direction of the cover 22 on the beaker-shaped body 21 and the opposite direction to the disengaging direction is the same as the unscrewing direction of the cover 22 on the beaker-shaped body.

In the light of the foregoing, the operation of the filter group 10 is as follows, in accordance with the first embodiment shown in figures from 1 to 15.

To assemble the filter group 10 it is sufficient to engage the engagement teeth 311 of the filter cartridge 30 in the respective engaging seatings 252 of the support body 25, i.e. by nearing the filter cartridge 30 in the axial direction, at any angular position it is in, the engaging teeth 311 initially contact the bottom edge of the shank 251.

If the engagement teeth 311 are not already aligned with the engaging seating 252, they contact a portion of the lower edge interested by one of the guide surfaces 255; when the filter cartridge 30 is pressed axially towards the support body 25 (and/or rotated slightly with respect to the longitudinal axis A) the engaging teeth drag on the guide surfaces 255 until they align with the respective engaging seatings 252.

In this position, with a further simple axial translation of the filter cartridge 30, such as to allow the engaging tooth 311 - flexing radially - to overcome the shank 251 that separates the bottom edge thereof from the engaging seating 252, the engaging teeth then engage to the relative engaging seatings 252 fashioned in the shank 251.

In particular, the engaging surface of each engaging tooth 311 remains stably supported on each rest surface 253 of the respective engaging seating 252. Following this (if it has not been done before or if it is necessary for the applications intended for the filter cartridge 30), it is sufficient to simply attach the supporting body 25 to the cover 22, i.e. to the flexible hooks 220.

In the present embodiment, once engaged during assembly of the filter group 10, the support body 25 is not removable with respect to the cover 22.

The guide surfaces 255 serve to precisely centre the engaging tooth 312 in the engaging seating 252 without the operator having necessarily to guide and see the alignment, i.e. even when the engaging seating is located internally of the concavity of the cover 22.

Further, the screwing of the cover 22 to the body 21 is proceeded with, thus closing the casing 20 with the filter cartridge 30 closed internally thereof. During the screwing-in rotation, the support body 25 and the filter cartridge 30 are axially compressed on one another and are subjected to a mutual rotation in the above-mentioned disengaging direction.

In practice, the engaging tooth 311 is pushed into contact with the first portion 2571 of the engaging seating 252 and towards the second position thereof.

In this way, during the closing of the casing 20, accidental detachment of the filter cartridge 30 from the supporting body 25 is substantially prevented thanks to the contact between the flank of the engaging tooth 311 and the first portion 2571.

Whenever the casing 20 is to be opened, for inspection and/or maintenance and/or to replace the filter cartridge 30, the following procedure is observed. First, the cover 22 is unscrewed from the beaker-shaped body 21.

During the unscrewing operation the support body 25 and the filter cartridge 30 are mutually rotated in the above-described disengaging direction.

Further, the support body 25 and the filter cartridge 30 distance from one another, as the filter cartridge 30 is axially braked/retained by the friction resulting between the first and the second annular seal 324 and 325 and their respective seatings. Irrespective of the axial position of the engaging tooth 311 with respect to the respective engaging seating 252, the flank of the engaging tooth 311 goes into contact with the lateral wall 256 of the engaging seating 252 following the unscrewing of the cover 22.

This prevents inadvertent disconnection of the filter cartridge 30 and therefore of any undesirable accidental leaking of the fluid and/or particulate. Following the unscrewing of the cover 22, by gravity or following traction by an operator, the engaging teeth 311 can move into the first position thereof. In order to remove the filter cartridge 30 from the engagement with the support body 25, with the engaging teeth 311 in the first position, it is sufficient to slightly rotate the filter cartridge 30 in the disengaging direction in which the flank of the engaging tooth 311 (i.e. the inclined flank 312) is brought into contact with the disengaging ramp defined by the second portion 2572 of the engaging seating 252.

Continuing the rotation of the filter cartridge 30 in the same direction, the mutual sliding between the flanks of the coupling teeth 311 and the disengaging ramps defined by the second portions 2572 leads to the coupling teeth 311 engaging radially, so that each surface of the coupling of coupling teeth 311 moves away from the respective rest surface 253; in this way the engaging teeth are free to slide in the axial direction distancingly from the support body 25, releasing the filter cartridge 30 which can, therefore, be replaced.

In the first embodiment shown in figures from 1 to 15 and described in the foregoing, the engaging elements 311 are associated with the filter cartridge 30 (particularly the first support plate 31 thereof) and the engaging seating 252 is fashioned in the support body 25 which is associated to the cover 22; however, alternatively the engaging seating can be fashioned in the filter cartridge (for example in an upper support plate thereof) and the engaging teeth can be made in the support body 25 or the cover 22 of the casing 20 or in the beaker-shaped body 21 thereof or another body intended to support the filter cartridge.

Further, and alternatively, it is equivalently possible for the engaging seatings 252, as described above, to be formed directly on the cover 22 (with the cover itself constituting the support body 25 of the filter cartridge 30) or in the beaker-shaped body 21.

In particular, with particular reference to the second embodiment shown in figures from 16 to 24 (in which the reference numbers of the common components, or components having the same technical portion are unchanged with respect to those of the first embodiment described in the foregoing), the filter group 10 comprises an external casing, denoted in its entirety by reference numeral 20, which in turn comprises a beaker body 21, and a cover 22 able to close the beaker body 21.

The cover 22 (lower in the second embodiment shown in figures from 16 to 24) is conformed, in the example, substantially as a cap with a concavity facing upwards and exhibits a thread (external) able to screw into a corresponding thread (internal) defined on the open edge of the beaker body 21 (which is located superiorly to the cover 22 with a concavity facing downwards in the second embodiment shown in figures from 16 to 24). Defined in the beaker body 21 are at least an inlet conduit 210 of the fluid to be filtered, in the example defined on a lateral wall of the beaker body 21, an outlet conduit 211 of the filtered fluid, in the example realised at the upper wall of the beaker body 21 and preferably in a central position.

Also, the cover 22 can also comprise a discharge conduit 212 closed by a cap, for example also located at the bottom of the cover 22, preferably in a central position.

The outlet conduit 211 is located coaxially to the beaker body 21 and projects at least partially internally thereof via a first cylindrical seating 213.

The filter group 10 comprises a support body 25 able to support a filter cartridge, denoted in its entirety by 30, housed internally of the casing 20 and which will be described in detail in the following.

The support body 25 in the second embodiment shown in figures from 16 to 24 is defined in a piece with the cover 22 and coincides therewith, for example with the lower portion of the cover containing and defining the bottom of the cover 22.

The support body 25 comprises an annular flange 250, defined by the bottom of the cover itself.

The support body 25 further comprises a shank 251 projecting superiorly of the annular flange 250 (i.e. towards the inside of the casing 20).

A plurality of engaging seatings 252, for example lateral slits (for example having a substantially rectangular shape) are fashioned in the shank 251.

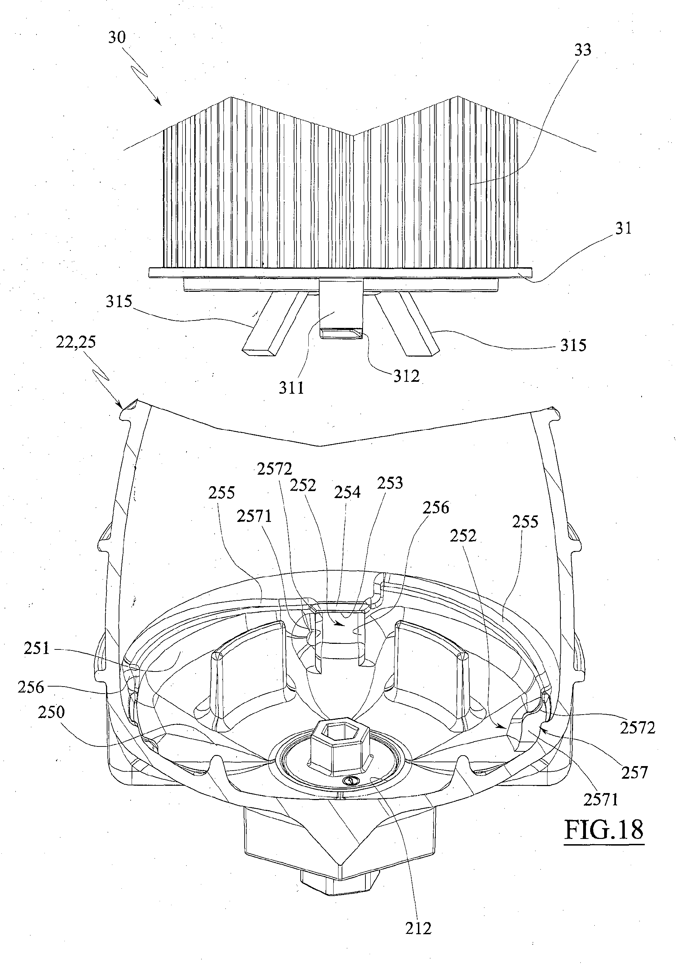

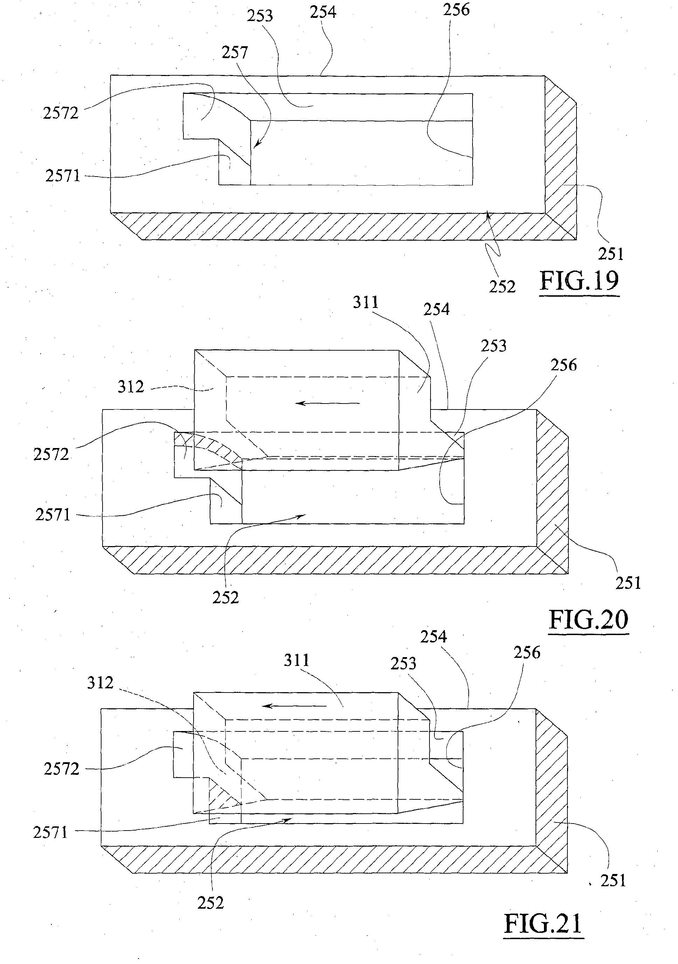

Each engaging seating 252 (shown in the detail of figure 18 and in figures 19-24) is superiorly delimited by a rest surface 253 that is substantially planar and substantially parallel to the annular flange 250 i.e. perpendicular to the longitudinal axis of the casing 20 (and/or the filter cartridge 30).

In practice each rest surface 253 is defined by the upper edge of the slit realised in the shank 251.

At each engaging seating 252, the shank 251, and in particular the upper free edge 254 thereof, exhibits at least a guide surface 255 (for example two) arranged by a side (for example on opposite sides) with respect to the respective engaging seating 252 and each is inclined in such a way as to converge towards the engaging seating.

In practice each guide surface 255 realises an inclined plane with respect to the plane defined by the rest surface 253 such as to realise an entry zone towards the respective engaging seating 252.

In other words the upper edge 254 of the shank 251 exhibits a substantially undulated conformation, defined by the guide surfaces 255, which each exhibit an inclination by an acute angle with respect to the parallel direction to the annular flange 250, the inclination of each pair of guide surfaces 255 being such as to be convergent towards the centre thereof.

Between the guide surfaces 255 the upper edge 254 exhibits a substantially flat profile that is parallel to the rest surface 253, in substance a slim bearing strip of the shank 251 distances the flat profile of the upper edge 254 from the rest surface 253.

Each engaging seating 252 comprises two lateral walls 256 and 257 that are opposite and branch laterally from the rest surface 253 on opposite sides thereof.

At least one of the lateral walls 256, 257 of the engaging seating 252, in the example the left lateral wall 257, comprises a first portion 2571 that is planar and substantially at right angles with the rest surface 253.

In particular, the term "at right angles" is understood in this context to mean perpendicular, or in any case exhibiting a plane profile lying in a radial plane (or substantially radial), while the rest surface 253 exhibits a circumferential development.

Also the at least one of the lateral walls 256, 257 of the engaging seating 252 comprising the first portion 2571, in the example the left lateral wall 257, comprises a second portion 2572 contiguous to the first portion 2571 and defining a disengaging ramp inclined with respect to the lie plane of the first portion 2571.

In practice the disengaging ramp is defined by a portion of slim thickness radial to the shank 251 defined over a limited axial portion of the lateral wall 257 of the engaging seating 252.

The portion engaging a slim thickness in practice exhibits a radial end that is substantially flush with a wall (in the example the external wall) of the shank 251 and the other radial end located substantially at the halfway line of the radial thickness of the shank (or flush with the internal wall of the shank 251). The disengaging ramp might advantageously be realised by an inclined connecting surface (with respect to the radial direction) between the external face and the internal face of the shank 251, which defines a variable-thickness profile along the circumferential direction with a relatively low inclination between the external face and the internal face of the shank.

The disengaging ramp, i.e. the second portion 2572, might also be parallel to the opposite lateral wall 256 of the engaging seating 252 although having a small thickness.

At the second portion 2572 the plan profile of the shank 251 exhibits a thickness that gradually increases (in a radial direction) continuously starting from the tapered end located at the external wall of the shank 251 up to the broadened end at which it conjoins with the internal wall of the shank.

The second portion 2572 is advantageously substantially rounded.

Alternatively the second portion 2572 can be substantially planar.

The first portion 2571 and the second portion 2572 are reciprocally inclined by an angle comprised between 30° and 60°, for example substantially 45°.

In a first variant of the second embodiment shown in figures from 18 to 21, the second portion 2572 branches substantially from the rest surface 253, in practice the second portion 2752 is proximal to the rest surface, while the first portion 2571 axially prolongs the second portion 2572 and is therefore distal from the rest surface 253.

In practice, in the first variant the second portion 2572 is located at a higher level than the first portion 2571.

In a second variant of the second embodiment shown in figures from 22 to 24, the first portion 2571 branches substantially from the rest surface 253; in practice the first portion 2751 is proximal to the rest surface, while the second portion 2572 axially prolongs the first portion 2571 and is therefore distal from the rest surface 253.

In practice, in the second variant the second portion 2572 is located at a lower level than the first portion 2571.

The other lateral flank 256 of the engaging seating 252, opposite the first portion 2571 and the second portion 2572, is substantially planar and substantially at right angles with respect to the rest surface 253, i.e. it is flat and lies on a radial plane of the annular plane 250.

The lateral flank 256 might be realised at a radially-broadened portion of the shank 251.

In the example reported in the figures, the shank 251 exhibits a plurality of engaging seatings 252 (for example two or four) that are equidistant from one another (opposite) and aligned in plan view on an imaginary circumference coaxial with the annular flange 250 i.e. with the cover 22.

The filter cartridge 30 comprises a first support plate 31 (for example lower in the second embodiment shown in figures from 16 to 24) and a second support plate 32 (for example upper in the second embodiment shown in figures from 16 to 24), which are fixed to the opposite ends of a tubular filter wall 33, in the example illustrated a pleated membrane, which defines and delimits an internal volume that is substantially cylindrical.

The filter cartridge 30 can also comprise one or more support cores 34 inserted internally of the filter wall 33 and provided with through-holes for the passage of fluid under filtration.

The second support plate 32 exhibits a central hole 320 centred on the longitudinal axis A of the filter wall 33.

In particular, the second support plate 32 exhibits a substantially cylindrical central shank 321.

The central shank 321 is able to support an annular seal 324.

In use, the central shank 321 with the respective annular seal 324 can be inserted substantially snugly internally of the first cylindrical seating 213 of the beaker body 21.

In practice, when the filter cartridge 30 is in a position internally of the casing 20, the outlet conduit 211 is in communication with the internal volume of the filter cartridge 30 (i.e. the filter wall 33) through the central hole 320 and the central shank 321 of the second support plate 32.

The first support plate 31 is, for example, substantially closed disc-shaped (i.e. it is without through-holes) that are centred on the longitudinal axis A of the filter wall 33.

Because of the above-described configuration, the filter cartridge 30 internally of the casing 20 defines an external chamber communicating with the inlet conduit 210 and an internal chamber, coinciding with the internal volume of the filter wall 33, which communicates with the outlet conduit 211 of the filtered fluid through the central hole 320 and the central shank 321 of the second support plate 32.

A plurality of engaging teeth 311 are fashioned in the surface of the first support plate 31 opposite the filter wall 33, which engaging teeth 311 project substantially in an axial direction from the first support plate and defining (in the ratchet head thereof) an engaging surface facing towards the first support plate 31.

The engaging surface is substantially planar and lying on a substantially perpendicular plane with respect to the longitudinal axis A of the filter wall 33 and can go to rest contactingly with the rest surface 253 of an engaging seating 252, once the ratchet head of the engaging tooth 311 has entered the engaging seating.

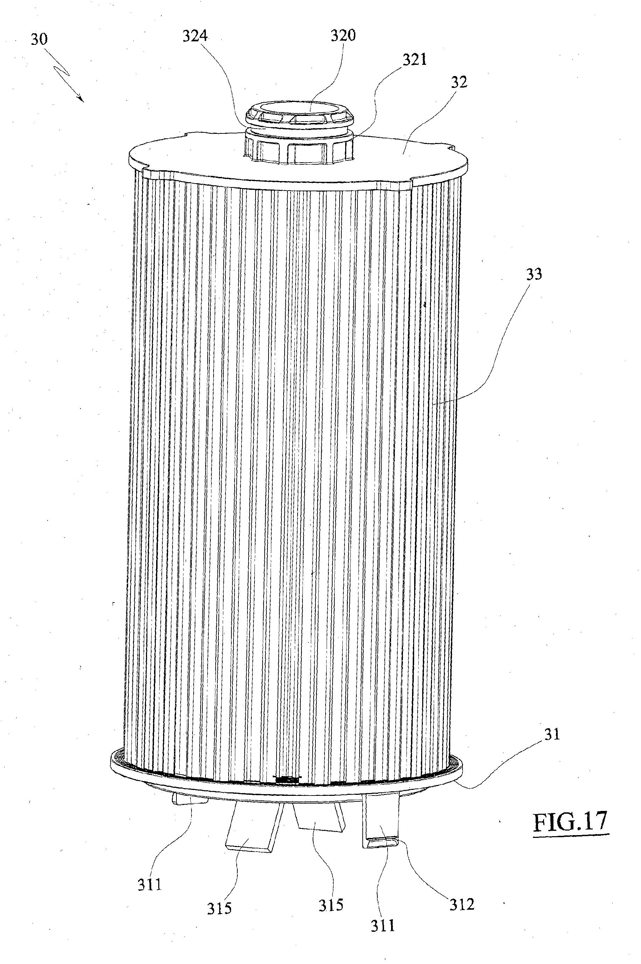

Each engaging tooth 311 further comprises an inclined lateral flank 312 (i.e. which exhibits at least an inclined portion with respect to the radial direction), as shown in the first embodiment and as visible in figures 17, 18, 20, 21, 23 and 24, in which the inclined flank 312 for example exhibits a shape that is substantially complementary to the second portion 2572 realised in the lateral wall 257 of the shank 251.

In practice, the inclined portion of the inclined flank 312 defines a bevel on a lateral flank of the engaging tooth 311, such as to facilitate the sliding of the engaging tooth on the second portion 2572 of the shank 251, following a modest rotation (in a disengaging direction and indicated by the arrow in figures 20, 21 and 23, 24) with respect to the longitudinal axis A, of the filter cartridge 30 with respect to the cover 22.

In practice, the engaging tooth 311 exhibits the inclined flank 312 on the left.

The flank opposite the inclined flank 312 of the engaging tooth 311 is substantially straight (by "straight" is meant that it exhibits a flat plane lying on a radial plane) and the engaging seating 252 exhibits the respective right straight lateral flank 256, so as to stably stop (or non-facilitate) the reciprocal rotation between the filter cartridge 30 and the support body 25, with respect to the longitudinal axis A in the opposite direction to the disengaging direction mentioned above.

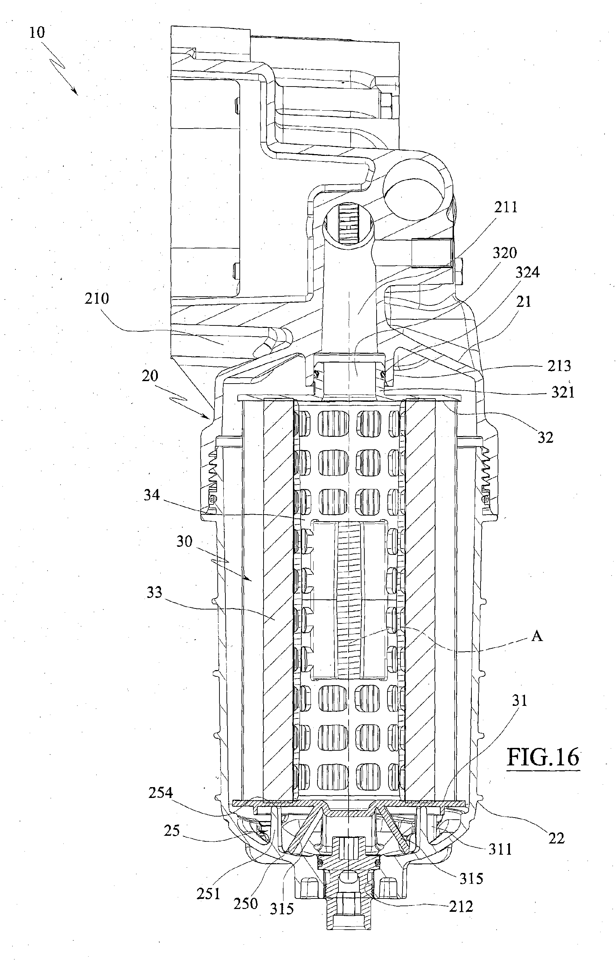

In particular, in the example shown in figures 16-24, two engaging teeth 311 are present, which are aligned in plan view with respect to an imaginary circumference concentric with respect (to the longitudinal axis A) to the first support plate 31 and reciprocally equidistant (located on opposite sides).

In a variant of the invention that is also independently protectable, thrust means, for example elastic, can be interposed between the annular flange 250 (i.e. the bottom of the cover 22) and the first support plate (i.e. the face thereof provided with the engaging teeth 311), which thrust means are able to push the first support plate 31 distancingly with respect to the annular flange.

With the thrust means, for example, during the design stage of the filter group 10 it is not necessary to consider the reciprocal movement between the filter cartridge 30 and the support body 25 (cover 22), which might be any.

The thrust means are configured (dimensioned) so as to (exert a thrust force able to) overcome the force of gravity acting on the filter cartridge 30, for example even when the filter wall 33 is wetted with the fluid being filtered.

In practice, the thrust means are configured so as to push (upwards) the engaging surface of the engaging tooth 311 to forcedly rest against the rest surface 253 of the engaging seating 252, in opposition to the force of gravity acting on the filter cartridge 30.

In a possible embodiment, not illustrated, of the thrust means, the thrust means might include a spring, for example a compression spring or flexion spring such as a helical spring or a Belleville washer or the like, able to be compressed between the annular flange 250 (the bottom of the cover 22) and the first support plate 31.

The thrust means might be associated removably to the inside of the casing 20 and/or can be fixed to one from between the first support plate 31 and the annular flange 250 (the bottom of the cover 22).

In the illustrated example the thrust means comprise one or more elastic strips 315, for example projecting in a substantially axial direction and for example exhibiting a longitudinal axis inclined with respect to the first support plate 31, i.e. from the face of the first support plate 31 from which the engaging teeth 311 branch.

Each elastic strip 315 substantially defines an elastically-flexible shelf, which is able to flex following an axial compression towards the first support plate 31 and return into an extended position on release (by effect of the elastic force acting on the elastic strip).

Each elastic strip 315 is, for example, realised in a single body with the first support plate 31.

The free end of each elastic strip 315, for example, projects axially beyond the level of the free ends of the engaging teeth 311.

In particular, in the example shown in figures 16-24, two elastic strips 315 are present which are aligned in plan view with respect to an imaginary circumference concentric with respect to the first support plate 31 and reciprocally equidistant (located on opposite sides and angularly at right angles with the engaging teeth 311).

In the example the elastic strips 315 are substantially contained internally of the imaginary circumference on which the engaging teeth 311 are aligned, so as not to be able to enter into contact with the shank 251 provided on the bottom of the cover 22, when the filter cartridge 30 is inserted in the cover. Returning to the connection between each engaging tooth 311 and the respective engaging seating 252, note that the engaging tooth 311, once the ratchet head thereof is inserted in the engaging seating, can be moved axially in the engaging seating 252 by a limited axial displacement between two end positions, of which a first raised position, in which the engaging seating 311 is resting with the engaging surface below the rest surface 253 of the engaging seating 252, and a second lowered position, in which the top of the engaging teeth 311 comes into contact with the wall of the engaging seating 252 opposite the rest surface 253 (or in any case in which the engaging seating of the engaging seating detaches from the rest surface 253).

Figures 19-21 shows a filter group 10 according to the first variant of the second embodiment of the invention, in which the above-described thrust means are present.

In practice, when the engaging tooth 311 engages with the engaging seating 252, the engaging seating 311 is naturally in the first raised position shown in figure 20 (pushed axially by the thrust means described above) and the flank of the engaging tooth 311 (for example the inclined plane 312 if present) is flanked (aligned along a circumferential direction which passes through the flank of the engaging teeth) to the second portion 2572.

When the cover 22 (with the filter cartridge 30 inserted therein) is neared to the casing 21, axial abutting means for example present in the casing and not illustrated, enter into contact with the filter cartridge 30 and push the cartridge 30 axially towards the bottom of the cover 22, in practice overcoming the action of the thrust means and bringing the engaging tooth 311 into the second lowered position (figure 21).

In this circumstance, when the filter cartridge 30 is rotated with respect to the cover 22 in the disengaging position (for example during the screwing-in of the cover 22 to the casing 21) with the engaging tooth 311 in the second lowered position, the contact area between the engaging tooth 311 and the lateral wall 257 of the engaging seating 252 is located at the first portion 2571 (see the broken line in figure 21) and in practice accidental deinserting of the engaging tooth 311 is prevented by the engaging seating 252.

When instead the cover 22 is disengaged from the casing 21, the filter cartridge 30 is free to be raised, for example by the thrust means, with respect to the cover 22, so as to return the engaging tooth 311 into the first raised position (figure 20) i.e. flanked to the second portion 2572.

In this way, following a disengaging rotation imposed on the filter cartridge 30, for example by the operative replacing it, the engaging tooth 311 is flexed backwards (towards the centre of the first support plate 31) and exits gradually from the engaging seating 252 (for example by dragging below the rest surface 253), enabling the filter cartridge 30 to be removed from the engagement with the cover 22 (i.e. the support body 25) by means of axial deinsertion thereof).

Alternatively the first variant of the second embodiment might not include the thrust means described above.

In this circumstance, when the engaging tooth 311 engages with the engaging seating 252, the engaging tooth 311 is naturally in the second lowered position shown in figure 21 (pushed axially downwards by the force of gravity) and the flank of the engaging tooth 311 (for example the inclined flank 31 if present) is flanked (aligned along a circumferential direction which passes through the flank of the engaging tooth) to the first portion 2571. When the filter cartridge 30 is rotated with respect to the cover 22 in the disengaging direction (for example during the screwing of the cover 22 to the casing 21) with the engaging tooth 311 in the second lowered position, the contact area between the engaging tooth and the lateral wall 257 of the engaging seating 252 is localised at the first portion 2571 (see the broken line of figure 21).

Following this rotation the engaging tooth 311 is substantially prevented from or in any case limited in the ability thereof to flex backwards and it remains solidly constrained internally of the engaging seating 252.

In fact, the force necessary for the flexion of the engaging tooth 311 depends on the rigidity thereof, on the sizing of the inclined flank 312 of the engaging tooth 311, and on the sizing of the first portion 2571; in a case where an engaging tooth 311 were particularly stiff, the first portion 2571 might go to rest in an intermediate zone of the inclined flank 312 of the engaging tooth, and the rigidity of the engaging tooth 311 would prevent the disengaging of the two components during the screwing step onto the cover 22.

When, however, the cover 22 is disengaged from the casing 21, the filter cartridge 30 is free to be raised, for example manually by the operator, with respect to the cover 22, so as to bring the engaging tooth 311 into the raised first position (figure 20) i.e. flanked to the second portion 2572.

In this way, following a disengaging rotation imposed on the filter cartridge 30, for example by the replacing operative, the engaging tooth 311 can be easily flexed backward (towards the centre of the first support plate 31) and gradually exits from the engaging seating 252 (for example by dragging below the rest surface 253), enabling the filter cartridge 30 to be removed from the engagement with the cover 22 (i.e. the support body 25) by axial deinsertion thereof.

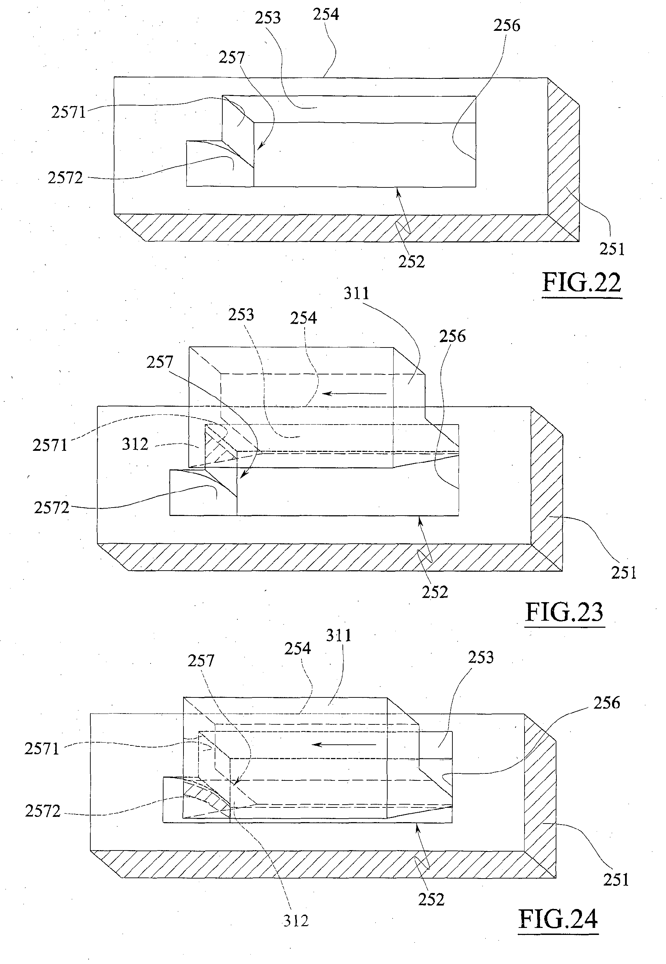

Figures 22-24 show a detail of the filter group 10 of the second variant of the second embodiment of the invention, in which the above-described thrust means are present.

In this second variant of the second embodiment, when the engaging tooth 311 engages with the engaging seating 252, the engaging tooth 311 is naturally in the first raised position shown in figure 23 (pushed axially by the above-described thrust means) and the flank of the engaging tooth 311 (for example the inclined flank 312 if present) is flanked (aligned along a circumferential direction which passes through the flank of the engaging tooth (to the first portion 2571.

When the filter cartridge 30 is rotated with respect to the cover 22 in the release direction (i.e. during either screwing in/out of the cover 22 with respect to the casing 21) with the engaging tooth 311 in the first raised position, the contact area between the engaging tooth and the lateral wall 257 of the engaging seating 252 is located at the first portion 2571 (see the broken line in figure 23).

Following this rotation the engaging seating is substantially prevented or in any case limited in flexing backwards and it remains solidly constrained in the engaging seating 252.

With the engaging tooth 311 in the second lowered position (reachable by operating the filter cartridge 30 along an axial translation in contrast to the thrust means) the flank of the engaging tooth 311 (for example the inclined flange 312 if present) is flanked (aligned along a circumferential direction which passes through the flank of the engaging tooth) to the second portion 2572.

When the filter cartridge 30 is rotated with respect to the cover 22 in the release direction with the engaging tooth 311 in the second lowered position, the contact area between the engaging tooth 311 and the lateral wall 257 of the engaging seating 252 is located at the second portion 2572 (see the broken line of figure 24).

Following the release rotation the engaging tooth 311 is flexed backwards (towards the centre of the first support plate 31) and exits gradually from the engaging seating 252, enabling the filter cartridge 30 to be removed from the engagement with the cover 22 (i.e. the support body 25) by means of the axial deinsertion thereof.

Regardless of whether the engaging tooth 311 is in the first or second position or whether the engaging seating 252 is of the type shown in the first variant of figures 19-21 (with or without thrust means) or of the type shown in the second variant of figures 22-24, when the filter cartridge 30 is rotated with respect to the support body 25 (i.e. to the cover 22) in the opposite direction to the release direction (for example during the unscrewing of the cover 22 with respect to the casing 21), the contact area between the flank of the engaging tooth 311 (opposite the inclined flank 312) and the engaging seating 252 is located at the lateral wall 256.

This contact between substantially planar and parallel profiles, prevents or in any case strongly limits the possibility of flexing backwards of the engaging tooth 311 which remains solidly constrained internally of the engaging seating 252, for example in contact with the rest surface 253 thereof, especially when the lateral wall 256 exhibits an increased radial thickness, i.e. when it is placed at a radial broadening of the shank 251.

The release direction is preferably different to the screwing direction of the cover 22 onto the beaker body 21, the direction opposite the release direction being equal to the unscrewing direction of the cover on the beaker body.

It is alternatively possible that in certain applications the release direction is equal to the screwing-in direction of the cover 22 on the beaker body 21 and the opposite direction to the release direction is equal to the unscrewing direction of the cover 22 on the beaker body.

Further, because of the way the filter group 10 is structured according to the second variant of the second embodiment, the release direction can be equally decided during the design stage as equal or different to the screwing or unscrewing direction.

In the light of what has been described above, the functioning of the filter group 10, according to the second embodiment shown in figures from 16 to 24, is the following.

To assemble the filter group 10 it is sufficient to enter the engaging teeth 311 of the filter cartridge 30 in the respective engaging seatings 252 of the support body 25 (i.e. the cover 22), in practice by nearing the filter cartridge 30 in an axial direction in any position it is in, the engaging teeth 311 initially contact the upper edge 254 (and/or the guide surfaces 255) of the shank 251.

Should the engaging teeth 311 not already be aligned with the engaging seating 252, the teeth 311 contact a portion of the upper edge 254 interested by one of the guide surfaces 255; the engaging teeth, when the filter cartridge 30 is pressed axially towards the bottom of the cover 22 (and/or rotated slightly with respect to the longitudinal axis A), drag on the guide surfaces 255 up to aligning with the respective engaging seatings 252.

The guide surfaces 255 serve to centre the engaging tooth 312 in the engaging seating 252 without the operator performing the engaging having necessarily to guide and see the alignment, i.e. even when the engaging seating 252 is internal of the concavity of the cover 22.

In this alignment position, with a simple further axial translation of the filter cartridge 30, such as to enable the engaging tooth 311 - by radially flexing - to pass beyond the bearing strip of shank 251 separating the upper edge 254 thereof from the engaging seating 252, the engaging teeth therefore snap-engage the respective engaging seatings 252 realised in the shank 251.

In particular, the engaging surface of each engaging tooth 311 is forcedly pressed to rest below each rest surface 253 of the respective engaging seating 252, for example by the thrust means where present, i.e. the elastic force directed upwards exerted by the elastic strips 315.

Further, the cover 22 is then screwed to the beaker body 21, thus closing the casing 20 with the filter cartridge 30 enclosed internally thereof.

During the screwing rotation the support body 25 (i.e. the bottom of the cover 22) and the filter cartridge 30 can be compressed axially to one another and/or can be subjected to a reciprocal rotation in a same direction to the disengaging direction mentioned above.

In the first variant of the second embodiment shown in figures 19-21 (with or without thrust means, as if present they are compressed by the abutting means) at the start of the screwing-in the engaging tooth 311 is in the second lowered position thereof and the accidental disengagement of the engaging tooth 311 from the engaging seating 252 is prevented by the contact between the flank (i.e. the inclined flank 312) of the engaging tooth 311 and the first portion 2571, as described above.

During the unscrewing, on the other hand, independently of the axial position of the engaging tooth 311 with respect to the respective engaging seating 252, the flank (opposite the inclined flank) of the engaging tooth 311 goes into contact with the lateral wall 256 of the engaging seating 252.

This prevents any accidental detachments of the filter cartridge 30 during the opening of the casing 20, for example every time the casing 20 has to be opened for inspection and/or maintenance and/or for replacing the filter cartridge 30.

To remove the filter cartridge 30 from the engagement with the cover 22 it is sufficient to bring (either with the operative's force overcoming the force of gravity or by means of the force of the thrust means) the engaging teeth 311 into the first raised position and slightly rotate the filter cartridge 30 in the disengaging direction, in which the flank of the engaging tooth 311 (i.e. the inclined flank 312) is brought into contact with the disengaging ramp defined by the second portion 2572.

By continuing the rotation of the filter cartridge 30 in the same direction, the reciprocal dragging between the flanks of the engaging teeth 311 and the disengaging ramps defined by the second portions 2572 causes the engaging teeth 311 to flex radially, so that each engaging tooth 311 can exit from the respective engaging seating 252; in this way the engaging teeth 311 are free to slide in an axial direction distancingly from the bottom of the cover 22 (i.e. from the support body 25), freeing the filter cartridge 30 which can, therefore, be replaced.

In the second variant of the second embodiment shown in figures 22-24, at the start of the screwing action, the engaging tooth 311 is in the first raised position thereof and the accidental disengagement of the engaging tooth 311 from the engaging seating 252 is prevented by the contact between the flank (i.e. the inclined flank 312) of the engaging tooth 311 and the first portion 2571, as described above.

During the unscrewing, on the other hand, independently of the axial position of the engaging tooth 311 with respect to the respective engaging seating 252, the flank (opposite the inclined flank 312) of the engaging tooth 311 goes into contact with the lateral wall 256 of the engaging seating 252.

This prevents any eventual accidental detachments of the filter cartridge 30 during the opening of the casing 20, for example each time the casing is to be opened 20 for inspection and/or maintenance and/or to replace the filter cartridge 30.

On completion of the unscrewing of the cover 22, the engaging teeth 311 are pushed by the thrust means (i.e. the elastic strips 315) into the first raised positions thereof, i.e. with the flank of the engaging tooth 311 (i.e. the inclined flank 312) substantially into contact with the first portion 2571, which prevents or limits the release.

To remove the filter cartridge 30 from the engagement with the cover 22, with the engaging teeth 311 in the first raised position, it is sufficient first to push the filter cartridge 30 towards the bottom of the cover 22, by operating a modest axial translation of the filter cartridge 30 in opposition to the thrust means (i.e. to the elastic thrust supplied by the elastic strips 315), so as to bring the engaging teeth 311 into the second lowered position thereof.

At this point it is sufficient to slightly rotate the filter cartridge 30 in the disengaging direction, thus bringing the flank of the engaging teeth 311 (i.e. the inclined flank 312) into contact with the disengaging ramp defined by the second portion 2572, up to freeing the engaging seatings 252 from the engagement with the engaging teeth 311, in such a way that they can slide in an axial direction distancingly from the bottom of the cover 22 (i.e. from the support body 25) and the filter cartridge 30 can therefore be replaced.

In the second embodiment too, shown in figures 16-24, and described in the foregoing, the engaging teeth 311 are associated to the filter cartridge 30 (especially the first support plate 31 thereof) and the engaging seating 252 is realised in the support body 25 which is defined in a single piece with the cover 22, though it is alternatively possible for the engaging seating 252 to be fashioned in the filter cartridge 30 (for example in a lower support plate thereof) and the engaging teeth 311 to be realized in the support body 25 or the cover 22 of the casing 20 or in the beaker body 21 thereof or another body destined to support the filter cartridge 30.

It is further and alternatively possible for the engaging seatings 252, as described above, to be equivalently fashioned directly on a support body 25 removably associable, for example by means of snap-engagements or the like, or in a semi-permanent way (as described in the first embodiment) to the cover 22 or the beaker body 21.

Further, an expert technician of the sector might make numerous further modifications of a technical nature to the filter group 10 as described above, without departing from the scope of the invention as claimed below. Moreover, all the details can be replaced by other technically-equivalent elements.

In practice, the materials employed, as well as the contingent shapes and dimensions, may be any according to requirements without thereby abandoning the scope of protection of the following claims.

## Claims

1. A filter group (10), comprising:
- a support body (25) provided with at least an engaging seating (252) and
- a filter cartridge (30) provided with a substantially toroidal filter wall (33) and a support plate (31) provided with at least an engaging tooth (311) able to snap-engage to the engaging seating (252),
where the engaging seating (252) is provided with a rest surface (253) lying on a substantially perpendicular plane to the axis (A) of the filter wall (33) and two opposite flanks (256, 257) that rise from opposite sides of the rest surface (253),
**characterised in that** at least a flank (257) of the flanks (256, 257) comprises a first portion (2571) substantially squared with respect to the rest surface (253) and a second portion (2572) axially prolonging the first portion (2571) and defining a disengaging ramp that is inclined with respect to the lie plane of the first portion (2571).

2. The group (10) of claim 1, wherein the second portion (2572) is configured so as to flex the engaging tooth (311) in a radial direction, distancingly from the engaging seating (252), following a reciprocal rotation between the filter cartridge (30) and the support body (25) with respect to the axis (A) of the filter wall (33).

3. The group (10) of claim 1 or 2, wherein the second portion (2572) is substantially rounded.

4. The group (10) of claim 1 or 2, wherein the second portion (2572) is substantially planar.

5. The group (10) of any one of the preceding claims, wherein the first portion (2571) and the second portion (2572) are inclined with respect to one another by an angle comprised between 30° and 60°.

6. The group (10) of any one of the preceding claims, wherein the second portion (2572) is proximal to the rest surface (253) and the first portion (2571) is distal from the rest surface.

7. The group (10) of any one of the preceding claims from 1 to 5, wherein the second portion (2572) is distal from the rest surface (253) and the first portion (2571) is proximal to the rest surface.

8. The group (10) of any one of the preceding claims, wherein the other flank (256) rising from the rest surface (253) of the engaging seating (252) is substantially planar and substantially squared with the rest surface (253).

9. The group (10) of any one of the preceding claims, wherein the engaging tooth (311) is elastically yielding and is able to give rise to a shape constraint with the rest surface (253) of the engaging seating (252) by snap-coupling following a reciprocal translation along the axis (A) of the filter wall (33), so as to removably reciprocally constrain the support body (25) to the filter cartridge (30).

10. The group (10) of any one of the preceding claims, wherein the engaging tooth (311) comprises an inclined flank (312) with respect to a radial plane, the inclined flank (312) being facing towards the flank (257) comprising the first portion (2571) and the second portion (2572).

11. The group (10) of claim 10, wherein the inclined flank (312) of the engaging tooth (311) and the second portion (2572) are such as to go into dragging contact following an axial rotation of the filter cartridge (30) with respect to the support body (25), for the unhooking of the engaging tooth (311) from the rest surface (253).

12. The group (10) of any one of the preceding claims, wherein the support body (25) comprises a flange (250), able to be sealedly engaged to the filter cartridge (30), and a shank (251) branching from the flange (250) towards the filter cartridge (30), the engaging seating (252) being realized at the shank (251).

13. The group (10) of claim 12, **characterised in that** it comprises at least a seal ring (314) interposed between the filter cartridge (30) and the support body (25) and destined to be compressed between them following the snap-engaging between the engaging tooth (311) and the engaging seating (252).

14. The group (10) of any one of the preceding claims, wherein thrust means are interposed between the support body (25) and the filter cartridge (30), which thrust means are able to push the filter cartridge (30) reciprocally in an axial direction with respect to the support body (25).

15. A support body (25) for filter cartridges (30) internally of a casing (20) which comprises at least an engaging seating (252) able to removably support a filter cartridge (30), where the engaging seating (252) is provided with a substantially planar rest surface (253) and two rising opposite flanks (256, 257) located on opposite sides of the rest surface (253), **characterised in that** at least a flank (257) of the flanks (256, 257) comprises a first portion (2571) substantially squared with the rest surface (253) and a second portion (2573) axially prolonging the first portion (2571) defining a disengaging ramp that is inclined with respect to a lie plane of the first portion (2571).

## Patentansprüche

1. Filtergruppe (10), Folgendes umfassend:
- einen Stützkörper (25), der mit mindestens einem Eingriffssitz (252) versehen ist, und
- eine Filterkartusche (30), die mit einer im Wesentlichen ringförmigen Filterwand (33) und einer Stützplatte (31) versehen ist, die mit mindestens einem Eingriffszahn (311) versehen ist, der zum Schnappeingriff mit dem Eingriffssitz (252) in der Lage ist,
wobei der Eingriffssitz (252) mit einer Auflagefläche (253) versehen ist, die auf einer zur Achse (A) der Filterwand im Wesentlichen senkrecht liegenden Ebene liegt, und mit zwei gegenüberliegenden Flanken (256, 257), die an gegenüberliegenden Seiten von der Auflagefläche (253) aufwärts verlaufen,
**dadurch gekennzeichnet, dass** mindestens eine Flanke (257) der Flanken (256, 257) einen ersten Abschnitt (2571) umfasst, der im Verhältnis zur Auflagefläche (253) im Wesentlichen rechtwinklig ist, und einen zweiten Abschnitt (2572), der den ersten Abschnitt (2571) axial verlängert und eine Löserampe definiert, die im Verhältnis zu Ebene der Lage des ersten Abschnitts (2571) geneigt ist.

2. Gruppe (10) nach Anspruch 1, wobei der zweite Abschnitt (2572) derart gestaltet ist, dass er den Eingriffszahn (311) in einer radialen Richtung weg vom Eingriffssitz (252) biegt, infolge einer wechselseitigen Drehung zwischen der Filterkartusche (30) und dem Stützkörper (25) im Verhältnis zur Achse (A) der Filterwand (33).

3. Gruppe (10) nach Anspruch 1 oder 2, wobei der zweite Abschnitt (2572) im Wesentlichen gerundet ist.

4. Gruppe (10) nach Anspruch 1 oder 2, wobei der zweite Abschnitt (2572) im Wesentlichen eben ist.

5. Gruppe (10) nach einem der vorhergehenden Ansprüche, wobei der erste Abschnitt (2571) und der zweite Abschnitt (2572) im Verhältnis zueinander in einem Winkel zwischen 30 und 60° geneigt sind.

6. Gruppe (10) nach einem der vorhergehenden Ansprüche, wobei der zweite Abschnitt (2572) nahe der Auflagefläche (253) liegt und der erste Abschnitt (2571) fern der Auflagefläche liegt.

7. Gruppe (10) nach einem der vorhergehenden Ansprüche 1 bis 5, wobei der zweite Abschnitt (2572) fern der Auflagefläche (253) liegt und der erste Abschnitt (2571) nahe der Auflagefläche liegt

8. Gruppe (10) nach einem der vorhergehenden Ansprüche, wobei die andere Flanke (256), die von der Auflagefläche (253) des Eingriffssitzes (252) aufwärts verläuft, im Wesentlichen eben und im Wesentlichen rechtwinklig zur Auflagefläche (253) ist.

9. Gruppe (10) nach einem der vorhergehenden Ansprüche, wobei der Eingriffszahn (311) elastisch nachgiebig und in der Lage ist, einen Formschluss mit der Auflagefläche (253) des Eingriffssitzes (252) zu bilden, infolge einer wechselseitigen linearen Verschiebung entlang der Achse (A) der Filterwand (33), so dass der Stützkörper (25) wechselseitig und lösbar an der Filterkartusche (30) gehalten wird.

10. Gruppe (10) nach einem der vorhergehenden Ansprüche, wobei der Eingriffszahn (311) eine im Verhältnis zu einer radialen Ebene geneigte Flanke (312) umfasst, wobei die geneigte Flanke (312) hin zu der Flanke (257) weist, die den ersten Abschnitt (2571) und den zweiten Abschnitt (2572) umfasst.

11. Gruppe (10) nach Anspruch 10, wobei die geneigte Flanke (312) des Eingriffszahns (311) und der zweite Abschnitt (2572) derart sind, dass sie sich in schleppenden Kontakt begeben, infolge einer axialen Drehung der Filterkartusche (30) im Verhältnis zum Stützkörper (25), um den Eingriffszahn (311) aus der Auflagefläche (253) auszuhaken.

12. Gruppe (10) nach einem der vorhergehenden Ansprüche, wobei der Stützkörper (25) einen Flansch (250) umfasst, der in der Lage ist, dichtend in die Filterkartusche (30) einzugreifen, und einen Schaft (251), der vom Flansch (250) hin zur Filterkartusche (30) abzweigt, wobei der Eingriffssitz (252) am Schaft (251) umgesetzt ist.

13. Gruppe (10) nach Anspruch 12, **dadurch gekennzeichnet, dass** sie mindestens einen Dichtungsring (314) umfasst, der zwischen der Filterkartusche (30) und dem Stützkörper (25) eingesetzt und dafür vorgesehen ist, zwischen diesen infolge des Schnappeingriffs zwischen dem Eingriffszahn (311) und dem Eingriffssitz (252) zusammengepresst zu werden.

14. Gruppe (10) nach einem der vorhergehenden Ansprüche, wobei zwischen dem Stützkörper (25) und der Filterkartusche (30) Schiebemittel eingesetzt sind, wobei die Schiebemittel in der Lage sind, die Filterkartusche wechselseitig in eine im Verhältnis zum Stützkörper (25) axiale Richtung zu drücken.

15. Stützkörper (25) für eine Filterkartusche (30) im Inneren eines Gehäuses (20), der mindestens einen Eingriffssitz (252) umfasst, der in der Lage ist, eine Filterkartusche entnehmbar zu stützen, wobei der Eingriffssitz (252) mit einer im Wesentlichen ebenen Auflagefläche (253) und zwei aufwärts verlaufenden gegenüberliegenden Flanken (256, 257) versehen ist, die an gegenüberliegenden Seiten der Auflagefläche (253) angeordnet sind, **dadurch gekennzeichnet, dass** mindestens eine Flanke (257) der Flanken (256, 257) einen ersten Abschnitt (2571) umfasst, der im Wesentlichen rechtwinklig zur Auflagefläche (253) ist, und einen zweiten Abschnitt (2573), der den ersten Abschnitt (2571) axial verlängert und eine Löserampe definiert, die im Verhältnis zur Ebene der Lage des ersten Abschnitts (2571) geneigt ist.

## Revendications

1. Groupe de filtres (10), comprenant :
- un corps de support (25) doté d'au moins une surface d'enclenchement (252), et
- une cartouche de filtre (30) dotée d'une paroi filtrante sensiblement toroïdale (33) et d'une plaque de support (31) dotée d'au moins une dent venant en prise (311) pouvant s'encliqueter dans la surface d'enclenchement (252),
où la surface d'enclenchement (252) est dotée d'une surface de repos (253) reposant sur un plan sensiblement perpendiculaire à l'axe (A) de la paroi filtrante (33) et de deux flancs opposés (256, 257) qui s'élèvent depuis les côtés opposés de la surface de repos (253), **caractérisé en ce qu'**au moins un flanc (257) des flancs (256, 257) comprend une première partie (2571) sensiblement carrée par rapport à la surface de repos (253) et une seconde partie (2572) prolongeant dans l'axe la première partie (2571) et délimitant une rampe d'enclenchement qui est inclinée par rapport au plan de pose de la première partie (2571).

2. Groupe (10) selon la revendication 1, dans lequel la seconde partie (2572) est configurée de façon à plier la dent venant en prise (311) dans une direction radiale, à distance de la surface d'enclenchement (252), selon une rotation réciproque entre la cartouche de filtre (30) et le corps de support (25) par rapport à l'axe (A) de la paroi filtrante (33).

3. Groupe (10) selon la revendication 1 ou 2, dans lequel la seconde partie (2572) est sensiblement arrondie.

4. Groupe (10) selon la revendication 1 ou 2, dans lequel la seconde partie (2572) est sensiblement plate.

5. Groupe (10) selon l'une quelconque des revendications précédentes, dans lequel la première partie (2571) et la seconde partie (2572) sont inclinées l'une par rapport à l'autre selon un angle compris entre 30° et 60°.

6. Groupe (10) selon l'une quelconque des revendications précédentes, dans lequel la seconde partie (2572) est proximale à la surface de repos (253) et la première partie (2571) est distale par rapport à la surface de repos.

7. Groupe (10) selon l'une quelconque des revendications 1 à 5, dans lequel la seconde partie (2572) est distale par rapport à la surface de repos (253) et la première partie (2571) est proximale à la surface de repos.

8. Groupe (10) selon l'une quelconque des revendications précédentes, dans lequel l'autre flanc (256) s'élevant de la surface de repos (253) de la surface d'engagement (252) est sensiblement plat et sensiblement carré par rapport à la surface de repos (253).

9. Groupe (10) selon l'une quelconque des revendications précédentes, dans lequel la dent venant en prise (311) est élastiquement flexible et est capable de provoquer une contrainte de forme avec la surface de repos (253) de la surface d'enclenchement (252) via un accouplement encliquetable selon une translation réciproque le long de l'axe (A) de la paroi filtrante (33), de façon à contraindre réciproquement et de manière amovible le corps de support (25) par rapport à la cartouche de filtre (30).

10. Groupe (10) selon l'une quelconque des revendications précédentes, dans lequel la dent venant en prise (311) comprend un flanc incliné (312) par rapport à un plan radial, le flanc incliné (312) faisant face au flanc (257) comprenant la première partie (2571) et la deuxième partie (2572).

11. Groupe (10) selon la revendication 10, dans lequel le flanc incliné (312) de la dent venant en prise (311) et la seconde partie (2572) sont conçus de façon à créer une résistance après une rotation axiale de la cartouche de filtre (30) par rapport au corps de support (25), pour le décrochage de la dent venant en prise (311) de la surface de repos (253).

12. Groupe (10) selon l'une quelconque des revendications précédentes, dans lequel le corps de support (25) comprend un flanc (250), pouvant être hermétiquement engagé dans la cartouche de filtre (30), et une tige (251) partante du flanc (250) vers la cartouche de filtre (30), la surface d'enclenchement (252) étant réalisée au niveau de la tige (251).

13. Groupe (10) selon la revendication 12, **caractérisé en ce qu'**il comprend un joint d'étanchéité (314) interposé entre la cartouche de filtre (30) et le corps de support (25) et destiné à être comprimé entre ces derniers après l'encliquetage entre la dent venant en prise (311) et la surface d'enclenchement (252).

14. Groupe (10) selon l'une quelconque des revendications précédentes, dans lequel des moyens de poussée sont interposés entre le corps de support (25) et la cartouche de filtre (30), lesdits moyens de poussée étant capables de pousser la cartouche de filtre (30) réciproquement dans une direction axiale par rapport au corps de support (25).

15. Corps de support (25) pour cartouches de filtre (30) à l'intérieur d'un carter (20) qui comprend au moins une surface d'enclenchement (252) pouvant soutenir de manière amovible une cartouche de filtre (30), dans lequel la surface d'enclenchement (252) est dotée d'une surface de repos (253) sensiblement plate et de deux flancs opposés (256, 257) s'élevant situés sur les côtés opposés de la surface de repos (253), **caractérisé en ce qu'**au moins un flanc (257) des flancs (256, 257) comprend une première partie (2571) sensiblement carrée par rapport à la surface de repos (253) et une deuxième partie (2573) prolongeant dans l'axe la première partie (2571) et délimitant une rampe d'enclenchement qui est inclinée par rapport au plan de pose de la première partie (2571).
